# FASCICULE DE BREVET EUROPEEN

(11) **EP 2 436 579 B1**
(45) Date de publication et mention de la délivrance du brevet: **17.08.2016**
(21) Numéro de dépôt: 11306187.3
(22) Date de dépôt: 22.09.2011
(51) Int. Cl.: B62D 25/14

(54) **Ensemble de traverse de planche de bord pour véhicule automobile.**
Querträgergruppe eines Armaturenbrettes für ein Auto
Dashboard crossmember unit for an automobile.

(30) Priorité: 30.09.2010 FR 1057914
(43) Date de publication de la demande: 04.04.2012
(73) Titulaire: Faurecia Intérieur Industrie, 92000 Nanterre (FR)
(72) Inventeur: Descamps, Albin, 60240 Mont Javoult (FR); Baudart, Laurent, 60530 FRESNOY EN THELLE (FR); Vasilescu, Claudiu, 75017 Paris (FR); Ponthieu, Didier, 60480 LA NEUVILLE SAINT PIERRE (FR)
(74) Mandataire: Lavoix

(56) Documents cités:
- EP-A1- 1 630 077
- EP-A2- 1 762 469
- DE-A1- 10 023 506
- FR-A1- 2 914 900

## Description

La présente invention concerne un ensemble de traverse de planche de bord pour véhicule automobile, du type comprenant une traverse fabriquée à partir d'un premier matériau, ledit ensemble comprenant :
- des moyens de fixation pour fixer la traverse à au moins un montant latéral avant de la caisse du véhicule ;
- un support de colonne de direction fixé sur la traverse pour supporter une colonne de direction ;
- une zone de liaison pour relier la traverse à un élément du véhicule ; et
- un élément de renfort solidaire de la traverse et fabriqué à partir d'un deuxième matériau plus léger que le premier matériau, l'élément de renfort s'étendant le long d'au moins une partie de la traverse et présentant une partie de section sensiblement complémentaire de la section d'une partie de la traverse, ladite partie de section sensiblement complémentaire étant appliquée contre la traverse.

La traverse de planche de bord constitue un élément majeur du poste de conduite d'un véhicule automobile car elle supporte différents équipements (colonne de direction, airbag, planche de bord, etc.) et participe de façon importante à la maîtrise de la déformation du véhicule lors d'un choc.

Les charges et efforts que doit supporter la traverse entraînent donc un besoin important de résistance et de raideur et ont conduit jusqu'à maintenant à la conception de traverses en acier avec des épaisseurs plus ou moins importantes auxquelles sont ajoutés des éléments par exemple en magnésium, tels que des moyens de fixation de la colonne de direction ou d'une jambe de force, destinés à adapter le comportement vibratoire de ces éléments sur les traverses, tel que décrit dans le document EP 1 630 077. EP1762469 décrit un ensemble selon le préambule de la revendication 1. Cependant, de tels ensembles présentent une masse élevée et n'offrent pas une robustesse suffisante, notamment en termes de rigidité, en cas de choc sur le véhicule. Plus particulièrement, un manque de rigidité est constaté au niveau de la jonction entre le montant latéral avant et la traverse pouvant engendrer un décrochement de cette dernière en cas de choc.

L'invention a pour but de proposer un ensemble de masse réduite et de bonne performance et qui soit simple à fabriquer. A cet effet, l'invention a pour objet un ensemble selon la revendication 1.

L'ensemble selon l'invention peut comporter une ou plusieurs des caractéristiques suivantes :
- la partie de section sensiblement complémentaire présente une section sensiblement semi-circulaire ;
- l'organe de fixation comporte une lumière de passage transversale destinée à recevoir un élément de fixation solidaire du montant latéral avant ;
- le soutien de colonne de direction comporte au moins une région de fixation pour fixer l'élément de renfort à la colonne de direction ;
- le soutien de colonne de direction comporte au moins une région de rigidification pour rigidifier le support de colonne de direction ;
- l'élément de renfort comprend une interface de liaison pour relier l'élément de renfort audit élément du véhicule ; et
- l'élément de renfort est monobloc.

L'invention a également pour objet une planche de bord, caractérisée en qu'elle comprend un ensemble tel que défini ci-dessus.

L'invention a en outre pour objet un véhicule automobile, caractérisé en ce qu'il comprend une planche de bord telle que décrite plus haut.

L'invention sera mieux comprise à la lecture de la description qui va suivre, donnée uniquement à titre d'exemple et faite en se référant aux dessins annexés, sur lesquels :
- la Figure 1 est une vue en perspective de l'arrière d'un ensemble de traverse de planche de bord de véhicule automobile selon l'invention ;
- la Figure 2 est une vue en perspective de l'arrière d'un élément de renfort de l'ensemble de la Figure 1 ; et
- la Figure 3 est une vue de dessus de l'élément de renfort de la Figure 2.

Afin de simplifier la description qui va suivre, les Figures ont été orientées suivant le système d'axes X, Y, Z définissant l'orientation usuelle d'un véhicule automobile, et dans lequel :
- l'axe X est l'axe longitudinal du véhicule, orienté d'arrière en avant ;
- l'axe Y est l'axe transversal orienté de droite à gauche ; et
- l'axe Z est l'axe vertical orienté du bas vers le haut.

Les termes de position et d'orientation qui sont utilisés par la suite s'entendent par rapport à ce système d'axes.

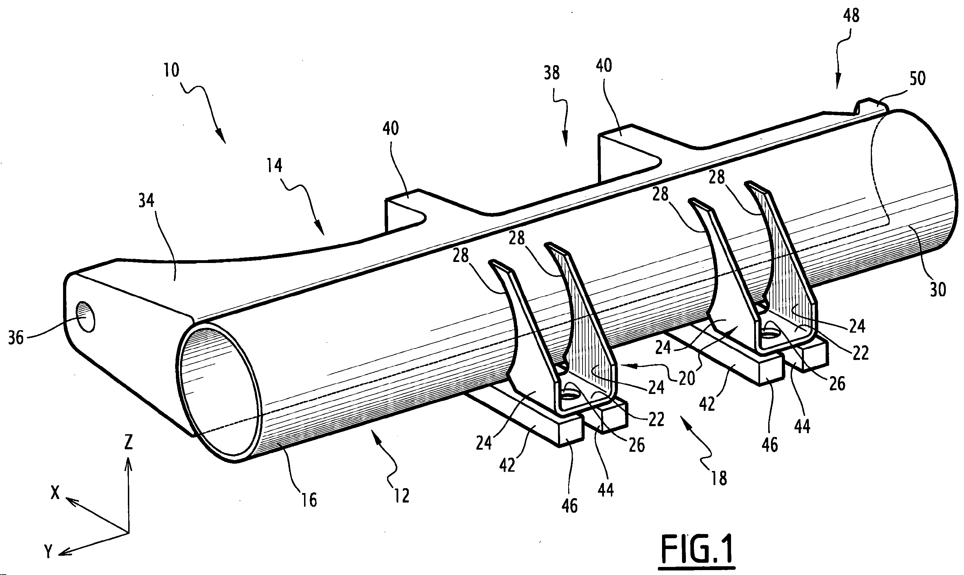

La Figure 1 représente un ensemble 10 de traverse d'une planche de bord d'un véhicule automobile.

L'ensemble 10 comprend une traverse 12 de planche de bord destinée à être fixée sur la caisse du véhicule et un élément de renfort 14 solidaire de la traverse 12.

La traverse 12 est d'un seul tenant et s'étend, à l'état monté, sensiblement transversalement à la direction d'avancement normal du véhicule, c'est-à-dire sensiblement suivant l'axe transversal Y.

La traverse 12 s'étend au moins sur la largeur du véhicule correspondant au côté conducteur, c'est-à-dire à gauche pour un véhicule avec conduite à gauche.

La traverse 12 présente une forme tubulaire, sensiblement rectiligne et de section constante sensiblement circulaire, et une épaisseur de paroi sensiblement constante.

La traverse 12 sensiblement cylindrique est fabriquée à partir d'un premier matériau, par exemple l'acier et/ou l'aluminium, et obtenue par tout procédé approprié, notamment par emboutissage.

En variante, la traverse 12 comporte une pluralité de tronçons emboutis et soudés les uns aux autres.

La traverse 12 est fixée au moins par son extrémité gauche 16 à un montant latéral avant de la caisse du véhicule, généralement nommé « montant A », par des moyens de fixation non représentés.

Ces moyens de fixation peuvent comporter par exemple une plaque métallique s'étendant dans un plan sensiblement vertical longitudinal et dans laquelle est pratiqué un orifice sensiblement circulaire pour recevoir l'extrémité 16 de la traverse 12 qui y est fixée par soudage, et des orifices de passage sont ménagés dans la plaque pour recevoir chacun un élément de fixation transversale solidaire du montant A, tel qu'une vis traversante.

En variante, l'ensemble 10 comprend des moyens de fixation longitudinale de l'extrémité 16 de la traverse 12 sur la caisse du véhicule.

En variante encore, les moyens de fixation de la traverse 12 sur la caisse du véhicule est une cornière de fixation transversale et longitudinale.

L'ensemble 10 comprend un support 18 de colonne de direction rapporté sur la traverse 12, à l'arrière de la traverse 12, pour supporter une colonne de direction.

Le support 18 de colonne de direction comporte deux pièces de support 20 identiques présentant chacune sensiblement une forme en « U » avec une âme 22 et deux ailes 24.

L'âme 22 s'étend sensiblement horizontalement et comprend une lumière de passage 26 pour recevoir un élément de fixation verticale solidaire de la colonne de direction, tel qu'une vis traversante.

Chaque aile 24 s'étend dans un plan sensiblement vertical longitudinal et possède un bord avant 28 sensiblement en arc de cercle complémentaire de la section de la traverse 12, le bord avant 28 étant appliqué contre la traverse 12, à l'arrière de la traverse 12, et fixé sur la traverse 12 par soudage.

L'ensemble 10 comprend une zone de liaison 30 formée par l'extrémité de la traverse 12 opposée à l'extrémité gauche 16 pour relier la traverse 12 à un élément du véhicule, tel qu'une jambe de force.

L'élément de renfort 14 s'étend le long d'au moins une partie de la traverse 12, c'est-à-dire suivant l'axe transversal Y, et est fabriqué à partir d'un deuxième matériau plus léger que le premier matériau constituant la traverse 12. Ce deuxième matériau est par exemple du magnésium, mais peut aussi être de l'aluminium ou bien un matériau plastique, ou encore un matériau plastique renforcé.

Selon le mode de réalisation représenté sur les Figures 1 à 3, l'élément de renfort 14 s'étend de l'extrémité gauche 16 de la traverse 12 à la zone de liaison 30 de la traverse 12.

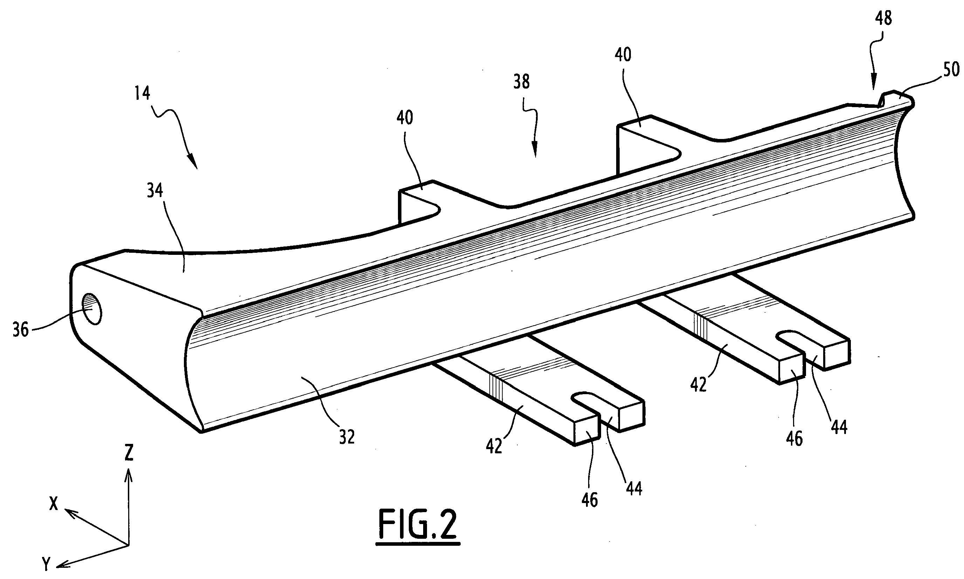

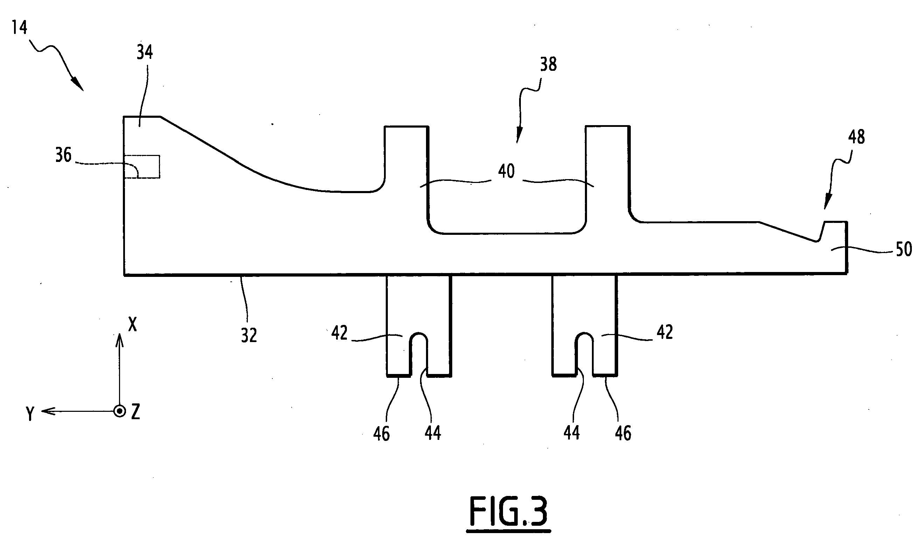

En référence aux Figures 2 et 3, l'élément de renfort 14 comporte une partie 32 de forme sensiblement complémentaire de la forme d'une partie de la traverse 12.

Plus précisément, la partie 32 présente une section sensiblement complémentaire de la section d'une partie de la traverse 12.

Ainsi, la partie 32 possède une forme sensiblement semi-cylindrique de section sensiblement semi-circulaire.

La partie semi-cylindrique 32 est appliquée contre la traverse 12, à l'avant de la traverse 12, à l'opposé du support 18 de colonne de direction, et fixée sur la traverse 12 par tout moyen approprié, notamment par collage, soudage ou système vis-écrou.

En variante, la partie 32 est appliquée contre la traverse 12, à l'arrière de la traverse 12, ou bien au-dessus de la traverse 12, ou bien encore en-dessous de la traverse 12. Le choix est laissé à l'homme du métier en fonction de ses contraintes notamment d'encombrement, de résistance aux chocs, de vibration et de poids.

L'élément de renfort 14 comprend un organe 34 de fixation en Y qui fait saillie vers l'avant de l'extrémité gauche de la partie semi-cylindrique 32 pour fixer l'élément de renfort 14 au montant A.

Une lumière de passage transversale 36 est ménagé dans l'organe de fixation 34 pour recevoir un élément de fixation transversale solidaire du montant A, tel qu'une vis traversante.

En variante, l'organe 34 est un organe de fixation en X sur la caisse du véhicule, la lumière de passage 36 étant longitudinale et destinée à recevoir un élément de fixation solidaire du montant A, tel qu'une vis traversante s'étendant suivant X.

En variante encore, l'organe 34 est une organe de fixation en X et en Y sur la caisse du véhicule.

L'élément de renfort 14 comprend un soutien 38 de colonne de direction pour supporter la colonne de direction.

Le soutien 38 de colonne de direction comporte deux pièces de soutien 40 sensiblement identiques qui font saillie vers l'avant d'un tronçon central de la partie semi-cylindrique 32.

Un orifice de passage est ménagé dans chaque pièce de soutien 40 pour recevoir un élément de fixation solidaire de la colonne de direction, tel qu'une vis traversante.

Les pièces de soutien 40 forment ainsi des régions de fixation pour fixer l'élément de renfort 14 à la colonne de direction.

Chaque pièce de soutien 40 est coudée pour s'étendre en-dessous de la partie semi-cylindrique 32 et être prolongée vers l'arrière par une extrémité 42.

Chaque extrémité 42 s'étend dans un plan sensiblement horizontal, parallèlement et en-dessous de l'âme 22 d'une pièce de support 20.

Une encoche longitudinale 44 est pratiquée sur un bord arrière 46 de chaque extrémité 42 pour recevoir l'élément de fixation verticale solidaire de la colonne de direction destiné à coopérer avec l'âme 22.

Les extrémités 42 forment ainsi des régions de rigidification pour rigidifier le support 18 de colonne de direction.

En variante, un orifice de passage est ménagé dans chaque extrémité 42 en regard de la lumière de passage 26 correspondante pour recevoir l'élément de fixation verticale solidaire de la colonne de direction.

Dans ce cas, les extrémités 42 forment ainsi à la fois des régions de fixation pour fixer l'élément de renfort 14 à la colonne de direction et des régions de rigidification pour rigidifier le support 18 de colonne de direction et améliorer son comportement vibratoire.

L'élément de renfort 14 comprend une interface de liaison 48 pour relier l'élément de renfort 14 à la jambe de force.

L'interface de liaison 48 est formée par l'extrémité droite 50 de la partie semi-cylindrique 32 opposée à l'organe de fixation 34, et sur laquelle la jambe de force est destinée à être fixée, notamment par vissage.

Pour cela, un orifice de passage est par exemple ménagé dans l'extrémité droite 50 pour recevoir un élément de fixation solidaire de la jambe de force, tel qu'une vis traversante.

L'élément de renfort 14 est monobloc, en particulier l'organe de fixation 34 et/ou le soutien 38 de colonne de direction et/ou l'interface de liaison 48 sont venus de matière avec la partie semi-cylindrique 32.

L'invention propose donc un ensemble léger et de fabrication simple qui permet d'améliorer le comportement du véhicule en cas de choc, limitant ainsi les risques de blessure du conducteur et des passagers.

En effet, l'élément de renfort permet de rendre la traverse plus résistante en renforçant les points de fixation principaux de la traverse sur la caisse du véhicule, en particulier les points de fixation avec le montant latéral avant, la colonne de direction et la jambe de force.

En outre, l'élément de renfort, étant d'un seul bloc, permet de limiter les risques de rupture de cet élément en cas de choc et d'augmenter encore davantage la rigidité de la traverse.

Le fait que l'élément de renfort comprenne un organe de fixation permettant d'assurer la liaison entre l'extrémité de l'élément de renfort et le montant latéral avant disposé à proximité, permet de donner de la robustesse à la jonction traverse/montant latéral avant et permet ainsi d'éviter tout risque de décrochement de la traverse, notamment en cas de choc sur le véhicule. De plus, le comportement vibratoire du véhicule ainsi que la transmission des efforts entre la traverse et le montant latéral avant disposé à proximité est améliorée.

De plus, le fait que l'élément de renfort 14 soit en un matériau plus léger que la matériau de la traverse 12, permet également d'améliorer les performances vibratoires et de résistances aux chocs tout en limitant l'augmentation de la masse de l'ensemble.

Par ailleurs, dans le cas où l'élément de renfort est en magnésium, c'est-à-dire un matériau léger ayant un bon coefficient d'absorption, cela permet d'amortir les vibrations de la colonne de direction, et donc d'améliorer le confort de conduite.

L'ensemble selon l'invention offre donc de bonnes performances mécaniques en améliorant son comportement aux vibrations et lors de déformations subies par le véhicule

En outre, la conception simple de l'élément de renfort permet à l'ensemble de s'intégrer à différents types de montant latéral avant, de colonne de direction et de jambe de force, et donc à différents types de véhicule.

L'assemblage de l'élément de renfort à la traverse se fait de façon particulièrement simple, la partie de section semi-cylindrique guidant le positionnement de l'élément de renfort sur la traverse.

Dans le mode de réalisation décrit ci-dessus, la traverse possède une section et une épaisseur de paroi constantes mais il est tout à fait possible de prévoir une traverse avec une section variable et/ou une épaisseur de paroi variable.

En outre, dans le mode de réalisation décrit ci-dessus, la traverse possède une section sensiblement circulaire mais il est tout à fait possible de prévoir une traverse avec une section de forme différente.

## Revendications

1. Ensemble (10) de traverse de planche de bord pour véhicule automobile, du type comprenant une traverse (12) fabriquée à partir d'un premier matériau, ledit ensemble (10) comprenant :
- des moyens de fixation pour fixer la traverse (12) à au moins un montant latéral avant de la caisse du véhicule ;
- un support (18) de colonne de direction fixé sur la traverse (12) pour supporter une colonne de direction ;
- une zone de liaison (30) pour relier la traverse (12) à un élément du véhicule ; et
- un élément de renfort (14) solidaire de la traverse (12) et fabriqué à partir d'un deuxième matériau plus léger que le premier matériau, l'élément de renfort (14) s'étendant le long d'au moins une partie de la traverse (12) et présentant une partie (32) de section sensiblement complémentaire de la section d'une partie de la traverse (12), ladite partie (32) de section sensiblement complémentaire étant appliquée contre la traverse (12),
l'élément de renfort (14) comprenant un organe de fixation (34) pour fixer l'élément de renfort (14) à un montant latéral avant, l'élément de renfort (14) et l'organe de fixation (34) étant venus de matière
**caractérisé en ce que** l'élément de renfort (14) comprend un soutien (38) de colonne de direction pour supporter la colonne de direction.

2. Ensemble (10) selon la revendication 1, **caractérisé en ce que** la partie (32) de section sensiblement complémentaire présente une section sensiblement semi-circulaire.

3. Ensemble (10) selon la revendication 1 ou 2, **caractérisé en ce que** l'organe de fixation (34) comporte une lumière de passage transversale (36) destinée à recevoir un élément de fixation solidaire du montant latéral avant.

4. Ensemble (10) selon la revendication 1, **caractérisé en ce que** le soutien (38) de colonne de direction comporte au moins une région de fixation (40) pour fixer l'élément de renfort (14) à la colonne de direction.

5. Ensemble (10) selon la revendication 1 ou 4, **caractérisé en ce que** le soutien (38) de colonne de direction comporte au moins une région de rigidification (42) pour rigidifier le support (18) de colonne de direction.

6. Ensemble (10) selon l'une quelconque des revendications 1 à 5, **caractérisé en ce que** l'élément de renfort (14) comprend une interface de liaison (48) pour relier l'élément de renfort (14) audit élément du véhicule.

7. Ensemble (10) selon l'une quelconque des revendications 1 à 6, **caractérisé en ce que** l'élément de renfort (14) est monobloc.

8. Planche de bord, **caractérisé en ce qu'**elle comprend un ensemble (10) selon l'une quelconque des revendications 1 à 7.

9. Véhicule automobile, **caractérisé en ce qu'**il comprend une planche de bord selon la revendication 8.

## Patentansprüche

1. Querträgergruppe (10) eines Armaturenbretts für ein Kraftfahrzeug der Bauart, umfassend einen Querträger (12), der aus einem ersten Material hergestellt ist, wobei die Gruppe (10) umfasst:
- Befestigungsmittel, um den Querträger (12) an mindestens einem vorderen seitlichen Pfosten der Karosserie des Fahrzeugs zu befestigen,
- eine auf dem Querträger (12) befestigte Lenksäulenstütze (18), um eine Lenksäule zu stützen,
- eine Verbindungszone (30), um den Querträger (12) mit einem Element des Fahrzeugs zu verbinden, und
- ein Verstärkungselement (14), das mit dem Querträger (12) fest verbunden ist und aus einem zweiten Material, das leichter als das erste Material ist, hergestellt ist, wobei sich das Verstärkungselement (14) entlang mindestens eines Teils des Querträgers (12) erstreckt und einen Teil (32) mit einem Querschnitt aufweist, der zum Querschnitt eines Teils des Querträgers (12) etwa komplementär ist, wobei der Teil (32) mit dem etwa komplementären Querschnitt am Querträger (12) anliegt,
wobei das Verstärkungselement (14) ein Befestigungsorgan (34) zur Befestigung des Verstärkungselements (14) an einem vorderen seitlichen Pfosten umfasst, wobei das Verstärkungselement (14) und das Befestigungsorgan (34) zusammenhängend sind,
**dadurch gekennzeichnet, dass** das Verstärkungselement (14) eine Lenksäulenunterstützung (38) zum Stützen der Lenksäule umfasst.

2. Gruppe (10) nach Anspruch 1, **dadurch gekennzeichnet, dass** der Teil (32) mit dem etwa komplementären Querschnitt einen etwa halbkreisförmigen Querschnitt aufweist.

3. Gruppe (10) nach Anspruch 1 oder 2, **dadurch gekennzeichnet, dass** das Befestigungsorgan (34) eine transversale Durchgangsöffnung (36) aufweist, die für die Aufnahme eines mit dem vorderen seitlichen Pfosten fest verbundenen Befestigungselements bestimmt ist.

4. Gruppe (10) nach Anspruch 1, **dadurch gekennzeichnet, dass** die Lenksäulenunterstützung (38) mindestens eine Befestigungsregion (40) zur Befestigung des Verstärkungselement (14) an der Lenksäule aufweist.

5. Gruppe (10) nach Anspruch 4 oder 5, **dadurch gekennzeichnet, dass** die Lenksäulenunterstützung (38) mindestens eine Versteifungsregion (42) zur Versteifung der Lenksäulenstütze (18) aufweist.

6. Gruppe (10) nach einem der Ansprüche 1 bis 5, **dadurch gekennzeichnet, dass** das Verstärkungselement (14) eine Verbindungsschnittstelle (48) zur Verbindung des Verstärkungselements (14) am Element des Fahrzeugs umfasst.

7. Gruppe (10) nach einem der Ansprüche 1 bis 6, **dadurch gekennzeichnet, dass** das Verstärkungselement (14) einstückig ist.

8. Armaturenbrett, **dadurch gekennzeichnet, dass** es eine Gruppe (10) nach einem der Ansprüche 1 bis 7 umfasst.

9. Kraftfahrzeug, **dadurch gekennzeichnet, dass** es ein Armaturenbrett nach Anspruch 8 umfasst.

## Claims

1. A dashboard crosspiece assembly (10) for a motor vehicle, of the type comprising a crosspiece (12) made from a first material, said assembly (10) comprising:
- fastening means to fasten the crosspiece (12) to at least one front lateral upright of the vehicle body;
- a steering column holder (18) fastened on the crosspiece (12) to support a steering column;
- a connecting zone (30) to connect the crosspiece (12) to elements of the vehicle; and
- a reinforcing element (14) secured to the crosspiece (12) and made from a second material lighter than the first material, the reinforcing element (14) extending along at least part of the crosspiece (12) and having a part (32) with a section substantially complementary to the section of a part of the crosspiece (12), said part (32) with a substantially complementary section being pressed against the crosspiece (12),
the reinforcing element (14) comprising a fastening member (34) for fastening the reinforcing element (14) to a front lateral upright, the reinforcing element (14) and the fastening member (34) being integral,
**characterized in that** the reinforcing element (14) comprises a steering column support (38) to support the steering column.

2. The assembly (10) according to claim 1, **characterized in that** the part (32) with a substantially complementary section has a substantially semicircular section.

3. The assembly (10) according to claim 1 or 2, **characterized in that** the fastening member (34) includes a transverse passage aperture (36) intended to receive a fastening element secured to the front lateral upright.

4. The assembly (10) according to claim 1, **characterized in that** the steering column support (38) includes at least one fastening region (40) to fasten the reinforcing element (14) to the steering column.

5. The assembly (10) according to claim 1 or 4, **characterized in that** the steering column support (38) includes at least one stiffening region (42) to stiffen the column holder (18).

6. The assembly (10) according to any one of claims 1 to 5, **characterized in that** the reinforcing element (14) comprises a connecting interface (48) to connect the reinforcing element (14) to said element of the vehicle.

7. The assembly (10) according to any one of claims 1 to 6, **characterized in that** the reinforcing element (14) is in a single piece.

8. A dashboard, **characterized in that** it comprises an assembly (10) according to any one of claims 1 to 7.

9. A motor vehicle, **characterized in that** it comprises a dashboard according to claim 8.
